# EUROPÄISCHE PATENTSCHRIFT

(11) **EP 3 145 701 B1**
(45) Veröffentlichungstag und Bekanntmachung des Hinweises auf die Patenterteilung: **09.07.2025**
(21) Anmeldenummer: 15721673.0
(22) Anmeldetag: 05.05.2015
(51) Int. Cl.: B29C 70/54, B29C 31/08, B29B 11/16, B29C 51/26

(54) **POSITIONIERUNGSKÖRPER ZUM POSITIONIEREN EINES HALBZEUGES UND VERFAHREN ZUM PRÄPARIEREN DES HALBZEUGES SOWIE HALBZEUG**
POSITIONING MEMBER FOR POSITIONING A SEMIFINISHED PRODUCT, METHOD FOR PREPARING THE SEMIFINISHED PRODUCT, AND SEMIFINISHED PRODUCT
ÉLÉMENT DE POSITIONNEMENT D'UN PRODUIT SEMI-FINI, PROCÉDÉ DE PRÉPARATION DU PRODUIT SEMI-FINI ET PRODUIT SEMI-FINI

(30) Priorität: 20.05.2014 DE 102014209524
(43) Veröffentlichungstag der Anmeldung: 29.03.2017
(73) Patentinhaber: Bayerische Motoren Werke Aktiengesellschaft, 80809 München (DE)
(72) Erfinder: HODDE, Jan, 80796 München (DE)
(86) Internationale Anmeldenummer: PCT/EP2015/059764
(87) Internationale Veröffentlichungsnummer: WO 2015/176949

(56) Entgegenhaltungen:
- EP-A1- 0 347 503
- DE-A1- 102010 054 097
- DE-A1- 102012 010 497
- DE-A1- 102012 019 915
- US-A- 6 030 568
- US-A1- 2004 026 025
- US-A1- 2013 164 503

## Beschreibung

Die vorliegende Erfindung betrifft ein System mit einem Faserhalbzeug und einem Positionierungskörper zum Positionieren des Faserhalbzeuges zumindest an wenigstens einem Positioniermittel einer Bearbeitungsanlage zum Bearbeiten des Faserhalbzeuges. Ferner betrifft die vorliegende Erfindung ein Verfahren zum Herstellen eines Systems mit einem Faserhalbzeuges.

Es ist grundlegend bekannt, dass für die Handhabung von Halbzeugen, wie insbesondere imprägnierten Halbzeugen und vorteilhaft imprägnierten Faserhalbzeugen, beispielsweise Greifer eingesetzt werden, welche das Halbzeug an deren Randbereichen einklemmen und folglich als Klemmgreifer bezeichnet werden können. Des Weiteren ist es grundlegend bekannt, dass in speziellen Bereichen der Halbzeuge Bohrungen und insbesondere Durchgangsbohrungen eingebracht sind, durch welche hindurch entsprechende Positionierstifte einer Handhabungsvorrichtung, wie beispielsweise einer Transportvorrichtung zum Transportieren der Halbzeuge von beispielsweise einer Bearbeitungsanlage zu einer anderen Bearbeitungsanlage, eingebracht werden können. Diese Bohrungen bzw. Löcher im Fasermaterial des Halbzeuges dienen folglich für eine Positionierung während des Transportes des Halbzeuges und vorteilhaft auch für eine Positionierung des Halbzeuges innerhalb einer Bearbeitungsanlage, welche folglich geometrisch vergleichbar ausgestaltete Positionierstifte aufweist, um das Halbzeug während dessen Bearbeitung in einer definierten und insbesondere vorbestimmten Position zu halten.

EP0347503A1 zeigt einen bekannten Stand der Technik.

Halbzeuge und insbesondere imprägnierte Faserhalbzeuge finden insbesondere im Flugzeugbau, in der Raumfahrt sowie auch im Fahrzeugbau Anwendung und werden bekannterweise als Prepregs bezeichnet. Prepregs sind vornehmlich ebene flächige Fasergebilde, welche in einem kontinuierlichen Prozess mit einem Matrixsystem im gewünschten Matrix-Verstärkungsfaser-Verhältnis imprägniert sind. So ist es grundlegend bekannt, dass zwei textile Gebilde, wie beispielsweise das unidirektionale Prepreg, bei welchem in der Schicht alle Fasern parallel ausgerichtet sind und zum anderen Gewebeprepregs mit einer Reihe unterschiedlicher Gewebearten verwendet werden. Die industrielle Herstellung von entsprechenden Halbzeugen und insbesondere imprägnierten Faserverbundwerkstoffhalbzeugen erfolgt in bekannter Weise durch beispielsweise Handlaminieren im Nasspressverfahren, im Prepregpressverfahren oder im Harzinfusionsverfahren, wie beispielsweise dem Resin-Transfer-Molding-(RTM)-Verfahren. Bei allen zuvor genannten Verfahren wird das Halbzeug aus beispielsweise Kunstfasern in ein Imprägnierwerkzeug und insbesondere eine Imprägniervorrichtung eingelegt und mit einem Imprägniermittel, wie beispielsweise einem Imprägnierharz getränkt bzw. besprüht, wobei das Imprägniermittel durch die Hohlräume zwischen den Fasern eindringt und diese ummantelt. Nach dem Imprägnierprozess wird bekannterweise das mit dem Imprägniermittel getränkte Halbzeug in ein entsprechendes Formwerkzeug zum Verpressen des Halbzeuges eingelegt, welches auch als Konsolidierungsvorrichtung bezeichnet werden kann. Während dieses Pressvorganges wird insbesondere die Struktur des imprägnierten Faserhalbzeuges vernetzt und das Halbzeug geformt. Während dieser entsprechenden Verarbeitungsprozesse sowie auch für den Transport des Halbzeuges von beispielsweise der Imprägniervorrichtung zu der Konsolidierungsvorrichtung werden die Halbzeuge mittels den oben genannten Positionierstiften gehalten. Diese Positionierstifte erstrecken sich folglich zumindest abschnittsweise durch entsprechende Aussparungen der Halbzeuge hindurch.

Diese Aussparungen müssen zur Ermöglichung der zuvor genannten Verarbeitungsprozesse des Halbzeuges außerhalb eines nach dem Beschnitt vorliegenden Bauteilbereichs des Halbzeuges vorliegen. Nachteilig wird dadurch folglich der Zuschnitt des Halbzeuges dimensional größer ausgelegt, als der tatsächlich für das hergestellte Bauteil genutzte Bereich sein muss. Das folglich überdimensionierte Halbzeug führt nachteilig zu einer Erhöhung der Produktionskosten sowie zu einer Erhöhung des Ausschusses, wobei der Ausschuss insbesondere der Bereich des Halbzeuges ist, welcher mit den Aussparungen zum Positionieren des Halbzeuges während des Transportes und/oder während der Bearbeitung dient.

Es ist daher die Aufgabe der vorliegenden Erfindung, die voranstehend beschriebenen Nachteile bei einem System mit einem Faserhalbzeug und insbesondere einem imprägnierten Faserhalbzeug zu beheben. Insbesondere ist es die Aufgabe der vorliegenden Erfindung, unter anderem ein Faserhalbzeug zur Verfügung zu stellen, welches während des Transportes sowie auch während der Verarbeitung bzw. Bearbeitung des Faserhalbzeuges innerhalb einer entsprechenden Bearbeitungsanlage in einfacher und kostengünstiger Weise positioniert werden kann.

Die voranstehende Aufgabe wird gelöst durch ein System mit einem Faserhalbzeug mit den Merkmalen gemäß Anspruch 1. Ferner wird die voranstehende Aufgabe gelöst durch ein Verfahren gemäß Anspruch 4. Weitere Merkmale und Details der Erfindung ergeben sich aus den Unteransprüchen, der Beschreibung und den Zeichnungen. Dabei gelten Merkmale und Details, die im Zusammenhang mit dem System mit einem Faserhalbzeug beschrieben sind, selbstverständlich auch im Zusammenhang mit dem erfindungsgemäßen Verfahren und jeweils umgekehrt, so dass bezüglich der Offenbarung zu den einzelnen Erfindungsaspekten stets wechselseitig Bezug genommen wird bzw. werden kann.

Das erfindungsgemäße System mit einem Faserhalbzeug weist einen Positionierungskörper zum Positionieren des Faserhalbzeuges zumindest an wenigstens einem Positioniermittel einer Bearbeitungsanlage zum Bearbeiten des Faserhalbzeuges auf, wobei das Faserhalbzeug zumindest einen ein Bauteil bildenden Bauteilbereich und zumindest einen Überlappungsbereich aufweist, wobei der Positionierungskörper zumindest abschnittsweise den Überlappungsbereich überlappend mittels Fadenelement an den Überlappungsbereich angenäht ist, wobei der Positionierungskörper wenigstens ein Anordnungselement zum Kontaktieren des Positioniermittels aufweist, laschenförmig ausgestaltet ist und ein Material geringerer Güte als der Bauteilbereich und/oder als der Überlappungsbereich aufweist. Vorteilhaft ist das Faserhalbzeug ein Faserverbundhalbzeug, wie beispielsweise ein Kohlefaserverbundhalbzeug, welches Verstärkungsfasern und eine Kunststoffmatrix aufweist. Hierbei umgibt die Kunststoffmatrix vorteilhaft die Verstärkungsfasern, welche durch Adhäsiv- oder Kohäsivkräfte an die Matrix gebunden sind. Mittels der Verwendung von Faserwerkstoffen haben Faser-Kunststoff-Verbunde insbesondere ein richtungsabhängiges Elastizitätsverhalten. Für das Faserhalbzeug können beispielsweise als Verstärkungsfasern anorganische Verstärkungsfasern, wie beispielsweise Basaltfasern, Borfasern, Glasfasern, Keramikfasern, oder metallische Verstärkungsfasern, wie beispielsweise Stahlfasern, oder organische Verstärkungsfasern, wie beispielsweise Aramitfasern, Kohlenstofffasern, Polyesterfasern, Nylonfasern, oder Naturfasern, wie insbesondere beispielsweise Flachsfasern, Hanffasern, Holzfasern oder Sisalfasern zum Einsatz kommen. Als Matrixsystem des Faserhalbzeuges kann beispielsweise ein thermoplastisches Matrixsystem, aufweisend insbesondere Polyetheretherketon (PEEK), Polyphenylensulfid (PPS), Polysulfon (PSU), Polyetherimid (PEI), Polytetrafluorethylen (PTFE), Epoxidharz, Aminoharz oder auch Vinylharze verwendet werden. Ebenfalls ist als Matrixsystem beispielsweise ein elastomeres Matrixsystem oder ein duroplastisches Matrixsystem, aufweisend beispielsweise Gummi oder Polyurethan möglich.

Eine Bearbeitungsanlage zum Bearbeiten des Faserhalbzeuges ist beispielsweise eine Injektionsanlage bzw. Imprägnieranlage zum Aufbringen der Kunststoffmatrix und insbesondere eines Imprägnierharzes auf die Verstärkungsfasern und insbesondere Verstärkungsfasermatten. Des Weiteren ist es denkbar, dass die Bearbeitungsanlage auch eine Konsolidierungsanlage ist, welche insbesondere zum Formen des Faserhalbzeuges und zum Vernetzen der Faserstruktur des Faserhalbzeuges dient, wobei die Konsolidierungsanlage insbesondere eine Pressanlage ist. Die Bearbeitungsanlage weist vorteilhaft ein Positioniermittel auf, mittels welchem das Faserhalbzeug an der Anlage angeordnet bzw. positioniert und vorteilhaft arretiert werden kann. Das Positioniermittel selbst kann in unterschiedlichster Form ausgestaltet sein. So ist es denkbar, dass das Positioniermittel beispielsweise ein Pin oder Stift ist oder auch in Form eines Greifelementes oder Klemmelementes ausgestaltet ist. Es ist des Weiteren denkbar, dass der erfindungsgemäße Positionierungskörper nicht nur zum Positionieren des Faserhalbzeuges an einem Positioniermittel in einer Bearbeitungsanlage dient, sondern insbesondere auch zum Positionieren an entsprechenden Positioniermitteln bzw. Haltemitteln bzw. Anordnungsmitteln an einer Transportvorrichtung bzw. einer Transportanlage, welche zum Transportieren des Faserhalbzeuges von beispielsweise einer ersten Bearbeitungsanlage zu einer zweiten Bearbeitungsanlage dient. Vorteilhaft weisen die Positioniermittel bzw. die Haltemittel oder Aufnahmemittel der Transportvorrichtung ebenfalls eine pinartige bzw. stiftartige Form auf oder sind in Form von Greifelementen oder Klemmelementen oder Vergleichbarem ausgestaltet, um das Faserhalbzeug zumindest während des Transportes von beispielsweise einer Bearbeitungsanlage zu einer anderen Bearbeitungsanlage in einer definierten Position zu halten. Der Positionierungskörper ist vorteilhaft folglich ein Anbauteil, welcher zusätzlich zu dem Faserhalbzeug an dem Faserhalbzeug lösbar oder auch unlösbar angeordnet werden kann. Durch das Material geringerer Güte kann das Faserhalbzeug in einfacher und kostengünstiger Weise hergestellt werden. Der Positionierungskörper ist vorteilhaft wiederverwendbar.

Der erfindungsgemäße Positionierungskörper ist laschenförmig ausgestaltet. Es ist des Weiteren möglich, dass der Positionierungskörper eine Materialdicke aufweist, die geringer oder auch dicker als die Materialdicke des Faserhalbzeuges ist. Vorteilhaft ist der Positionierungskörper beschädigungsfrei von dem Faserhalbzeug nach der Herstellung des Endbauteils bzw. Bauteils entfernbar, um folglich wiederverwendet werden zu können. Vorteilhaft weist folglich der Positionierungskörper eine derartige Gestalt auf, dass sich der Positionierungskörper ausgehend von dem Faserhalbzeug von diesem nach außen wegerstrecken kann, um als zusätzliches Anbauteil eine Positionierung des Faserhalbzeuges an einer Bearbeitungsanlage und/oder an einer Transportanlage bzw. -vorrichtung zu ermöglichen.

Im Rahmen der Erfindung ist es möglich, dass der Positionierungskörper ein Kunststoffmaterial, ein faserverstärktes Kunststoffmaterial, ein Zellulosematerial, ein nichtmetallisches Material, ein organisches Material und/oder ein anorganisches nichtmetallisches Material aufweist. So ist es denkbar, dass der Positionierungskörper, beispielsweise ein Zellulosematerial, insbesondere ein Papiermaterial, aufweist. Als nichtmetallisches Material kann vorteilhaft beispielsweise Holz oder Graphit verwendet werden. Weist der Positionierungskörper beispielsweise ein organisches Material auf, so ist es denkbar, dass der Positionierungskörper ein Holzmaterial oder auch ein Kunststoffmaterial aufweist, während als anorganisches nichtmetallisches Material beispielsweise Glas verwendet werden kann. Der Positionierungskörper weist ein Material geringer Güte auf, wobei insbesondere das Material zumindest kostengünstiger ist als das für das Halbzeug verwendete Material. Die Verwendung des Materials des Positionierungskörpers ist insbesondere bedingt durch das Material des Faserhalbzeuges sowie auch durch die Verwendung des Fügeverfahrens bzw. Verbindungsverfahrens zwischen dem Positionierungskörper und dem Faserhalbzeug.

Vorteilhaft weist der Positionierungskörper ein Anordnungselement zum Kontaktieren des Positioniermittels auf. Im Rahmen der Erfindung ist es folglich denkbar, dass das Anordnungselement eine Bohrung und insbesondere eine Durchgangsbohrung ist. Ist das Anordnungselement eine derartige Bohrung bzw. Durchgangsbohrung ist es denkbar, dass das Positioniermittel der Bearbeitungsanlage und/oder der Transportanlage sich zumindest abschnittsweise durch diese Bohrung hindurch erstreckt bzw. in diese Bohrung eingreift, wobei hierbei das Positioniermittel vorteilhaft dann ein Pin bzw. Stift bzw. ein stabförmiges Element ist. Es ist des Weiteren denkbar, dass das Anordnungselement auch eine Ausnehmung mit oder ohne entsprechende Hinterschneidung(en) oder ein Vorsprung, wie beispielsweise eine Nase oder ein Haken ist, welche folglich zum Anordnen bzw. Kontaktieren mit einem entsprechenden Positioniermittel geeignet sind. In diesem Fall ist es denkbar, dass das Positioniermittel selbst ein Greifelement oder ein Klemmelement ist, welches den Vorsprung greifen kann bzw. in eine Ausnehmung hineingreifen kann. Die Ausgestaltung bzw. geometrische Gestalt des Anordnungselementes soll im Rahmen der Erfindung nicht beschränkt werden. So ist es denkbar, dass das Anordnungselement neben einer Ausgestaltung als Ausnehmung bzw. Bohrung oder auch als Erhebung bzw. Vorsprung auch eine runde, ovale oder eckige, insbesondere viereckige geometrische Gestalt aufweisen kann. Die geometrische Ausgestaltung des Anordnungselementes hängt insbesondere von der Ausgestaltung des Positioniermittels der Bearbeitungsanlage bzw. der Transportanlage ab. Vorteilhaft weist die Transportanlage ein zu der Bearbeitungsanlage identisches Positioniermittel auf, so dass eine einfache Übergabe des Faserhalbzeuges von der Transportanlage zu der Bearbeitungsanlage ermöglicht werden kann.

Vorteilhaft ist der Positionierungskörper mittels eines lösbaren Verbindungsmittels an wenigstens einem Überlappungsbereich des Faserhalbzeuges angeordnet. Als lösbares Verbindungsmittel kann im Rahmen der Erfindung beispielsweise ein Faden verstanden werden. Der Überlappungsbereich des Faserhalbzeuges ist vorteilhaft ein später dem Endbauteil nicht zugehöriger Faserhalbzeugbereich, welcher dazu dient, den Positionierungskörper mit dem Faserhalbzeug zu verbinden. Der Überlappungsbereich wird nach der Herstellung des Endbauteils von diesem Endbauteil gemeinsam mit dem Positionierungskörper wieder entfernt. Vorteilhaft ist der Überlappungsbereich des Faserhalbzeuges derart klein dimensioniert, dass zwar eine Anordnung des Positionierungskörpers und eine Verbindung des Positionierungskörpers mit dem Überlappungsbereich des Faserhalbzeuges ermöglicht werden können, andererseits jedoch ein so geringer Ausschuss wie möglich bei der Entfernung des Überlappungsbereiches vom Endbauteil produziert wird, um die Herstellungskosten des Faserhalbzeuges und insbesondere des fertigen Endbauteils so gering als möglich zu halten.

Im Rahmen der Erfindung ist das Verbindungsmittel zum Annähen des Positionierungskörpers an zumindest einen Abschnitt des Überlappungsbereiches ein Fadenelement. Vorteilhaft ist es folglich denkbar, dass der Positionierungskörper unter Verwendung einer Nähanlage und insbesondere einer 2D-Portalnähanlage mit dem Überlappungsbereich des Faserhalbzeuges verbunden wird. Eine Portalnähanlage arbeitet beispielsweise mit wenigstens einem Nähkopf und vorteilhaft mit einer Mehrzahl an Nähköpfen. Der Positionierungskörper kann vorteilhaft mittels eines Steppstiches, Blindstiches (Einfaden)-Kettenstichs, eines Doppelstichs usw. mit dem Überlappungsbereich des Positionierungskörpers verbunden werden. Als Fadenelement dient beispielsweise ein Verbindungsfaden, wie insbesondere ein Garn, ein Glasfaserfaden, ein Polyesterfaden oder auch ein Aramidfaden. Es ist des Weiteren denkbar, dass der Überlappungsbereich und/oder der Positionierungskörper selbst bereits Löcher und insbesondere Bohrungen aufweist und folglich in definierter Form vorbearbeitet ist. Durch diese vorgestanzten bzw. vorgebohrten Löcher kann das Fadenelement vorteilhaft hindurchgezogen werden, so dass eine Verbindung mittels eines Einfädelns des Fadenelementes in die Bohrungen des Überlappungsbereiches bzw. des Positionierungskörpers stattfindet.

Es ist denkbar, dass das Faserhalbzeug ein Verstärkungsfasern aufweisender Preform ist, welcher in einer entsprechenden Injektionsanlage bzw. Imprägnieranlage mit einem Imprägniermittel, wie beispielsweise einem Imprägnierharz, getränkt wird, um ein entsprechendes Faserverbundhalbzeug zu erzeugen. Es ist des Weiteren denkbar, dass das Faserhalbzeug einen Überlappungsbereich aufweist, welcher vorteilhaft zwischen ca. 0,1 cm bis ca. 2,0 cm und besonders vorteilhaft zwischen ca. 0,5 cm bis ca. 1,0 cm breit ist und sich vorteilhaft in dieser Breite von dem Bauteilbereich des Faserhalbzeuges weg erstreckt. Der Überlappungsbereich des Faserhalbzeuges ist ein Bestandteil des Faserhalbzeuges und weist folglich ein identisches Material wie der Bauteilbereich des Faserhalbzeuges auf. Es ist des Weiteren denkbar, dass der Überlappungsbereich vorbearbeitet ist und/oder beispielsweise eine geringere Materialstärke, als der Bauteilbereich aufweist und/oder beispielsweise Bohrungen bzw. Löcher aufweist, durch welche beispielsweise das zuvor genannte Fadenelement hindurchgeführt werden kann, um den Positionierungskörper mit dem Überlappungsbereich des Faserhalbzeuges zu verbinden. Je nach geforderter bzw. gewünschter Anordnung eines Positionierungskörpers kann der Überlappungsbereich einseitig oder auch an mehreren Seiten des Faserhalbzeuges angeordnet bzw. ausgebildet sein. So ist es denkbar, dass das Faserhalbzeug insbesondere zwei sich gegenüberliegende Überlappungsbereiche aufweist, welche sich ausgehend von dem Bauteilbereich des Faserhalbzeuges, welcher insbesondere einen zentrischen Bereich des Faserhalbzeuges bildet, nach außen weg erstrecken. Es ist auch denkbar, dass der Überlappungsbereich in Umfangsrichtung um das Faserhalbzeug verläuft. Die Ausdehnungen bzw. Erstreckungen des Überlappungsbereiches sind insbesondere von der einzelnen Gestaltung des Faserhalbzeuges und auch von der Anordnung des Faserhalbzeuges innerhalb der Bearbeitungsanlage bzw. im Bereich der Transportanlage abhängig. Das bedeutet, dass je nach Ausgestaltung der Bearbeitungsanlage bzw. der Transportanlage sowie je nach geometrischer Form des Faserhalbzeuges selbst ein entsprechender Überlappungsbereich gebildet oder verbleibend ist, an welchem wenigstens ein Positionierungskörper und vorteilhaft wenigstens zwei sich im Wesentlichen gegenüberliegende Positionierungskörper angeordnet werden.

Des Weiteren ist ein Verfahren zum Herstellen eines Systems mit einem Faserhalbzeuges beansprucht, wobei ein erfindungsgemäßer, laschenförmiger Positionierungskörper zumindest abschnittsweise den Überlappungsbereich überlappend mittels einer Nähanlage unter Verwendung eines Fadenelementes an den Überlappungsbereich derart angenäht wird, dass das wenigstens eine Anordnungselement des Positionierungskörpers in einem definierten Abstand zu dem Bauteilbereich des Faserhalbzeuges angeordnet ist. Gemäß dem erfindungsgemäßen Verfahren wird folglich ein Faserhalbzeug der vorangegangenen Art hergestellt, um zumindest in einer Bearbeitungsanlage zum Bearbeiten des Faserhalbzeuges angeordnet werden zu können bzw. um mittels einer Transportanlage bzw. Transportvorrichtung von beispielsweise einer Bearbeitungsanlage zu wenigstens einer anderen Bearbeitungsanlage transportiert werden zu können. Hierbei wird ein Positionierungskörper der vorangegangenen Art zumindest abschnittsweise einen Überlappungsbereich des Faserhalbzeuges überlappend an diesem Faserhalbzeug angeordnet, wobei unter Verwendung eines Nähverfahrens der Positionierungskörper mit dem Faserhalbzeug lösbar verbunden wird. Es ist denkbar, dass wenigstens ein Positionierungskörper an dem Überlappungsbereich des Faserhalbzeuges angeordnet wird, wobei vorteilhaft wenigstens zwei und mehr Positionierungskörper an einem oder an einer Mehrzahl entsprechender Überlappungsbereiche des Faserhalbzeuges angeordnet werden. Bei bekannten Bearbeitungsanlagen bzw. Transportanlagen sind die Positioniermittel voneinander beabstandet angeordnet, wobei zwischen den Positioniermitteln zumeist das Faserhalbzeug angeordnet wird, um dieses in einer definierten Position zumindest während des Bearbeitungsvorganges bzw. des Transportvorgangs zu arretieren. Dementsprechend weist vorteilhaft auch das Faserhalbzeug, welches an die Bearbeitungsanlage angeordnet werden soll, entsprechend angeordnete Positionierungskörper auf, welche folglich später mit den Positioniermitteln der Bearbeitungsanlage bzw. mit den Positioniermitteln der Transportanlage wechselwirken bzw. interagieren können bzw. von den Positioniermitteln der Bearbeitungsanlage bzw. der Transportanlage gegriffen werden können. Infolgedessen erfolgt die Anordnung der Positionierungsmittel an dem Faserhalbzeug bzw. an dem Bauteilbereich des Faserhalbzeugs vorteilhaft in Berücksichtigung der Ausgestaltung der Bearbeitungsanlage bzw. der Transportanlage und insbesondere der Anordnung und Ausgestaltung der Positioniermittel der Bearbeitungsanlage bzw. der Positioniermittel der Transportanlage. Vorteilhaft wird bei dem erfindungsgemäßen Verfahren nach der Anordnung des Faserhalbzeuges an dem Positionierungskörper bzw. nach der Anordnung des wenigstens einen Positionierungskörpers an dem Überlappungsbereich des Faserhalbzeuges ein Nähverfahren angewandt, um eine lösbare Verbindung zwischen dem Positionierungskörper und dem Überlappungsbereich des Faserhalbzeuges zu erzeugen.

So ist es denkbar, dass der Positionierungskörper mittels einer Nähanlage unter Verwendung eines Fadenelementes an dem Überlappungsbereich angenäht wird. Als Nähanlage dient beispielsweise eine 2D-Portalnähanlage, wobei als Fadenelement, wie bereits zuvor genannt, ein Verbindungsfaden, wie beispielsweise ein Garn, ein Glasfaserfaden, ein Polyesterfaden oder auch ein Aramidfaden verwendet werden kann. Vorteilhaft wird bei der Anwendung eines Nähverfahrens ein einfaches Trennen des Positionierungskörpers von dem Überlappungsbereich bzw. von dem Faserhalbzeug ermöglicht, insbesondere da lediglich das Fadenelement zerstört werden muss, um den Positionierungskörper von dem Überlappungsbereich wieder entfernen zu können.

Bei dem beschriebenen Verfahren ergeben sich sämtliche Vorteile, die bereits zum System mit einem Faserhalbzeug gemäß den vorangegangenen Aspekten der Erfindung beschrieben worden sind.

Eine Bearbeitungsanlage und eine Transportvorrichtung sowie ein Positionierungskörper und ein Faserhalbzeug des erfindungsgemäßen Systems bzw. Verfahrens werden nachfolgend anhand von Zeichnungen näher erläutert. Es zeigen jeweils schematisch:
- Figur 1: in einer Seitenansicht eine Schnittdarstellung eines an einer Transportanlage angeordneten Faserhalbzeuges,
- Figur 2: in einer Seitenansicht eine Schnittdarstellung eines an einer Bearbeitungsanlage angeordneten Faserhalbzeuges,
- Figur 3: in einer Draufsicht eine Ausführungsform eines der Anmelderin intern bekannten Faserhalbzeuges,
- Figur 4a: in einer Draufsicht eine Ausführungsform eines erfindungsgemäßen Faserhalbzeuges mit erfindungsgemäßen Positionierungskörpern,
- Figur 4b: in einer Draufsicht eine weitere Ausführungsform eines erfindungsgemäßen Faserhalbzeuges mit erfindungsgemäßen Positionierungskörpern,
- Figur 5a: in einer Draufsicht eine weitere Ausführungsform eines erfindungsgemäßen Faserhalbzeuges mit erfindungsgemäßen Positionierungskörpern, und
- Figur 5b: in einer Draufsicht eine weitere Ausführungsform eines erfindungsgemäßen Faserhalbzeuges mit erfindungsgemäßen Positionierungskörpern.

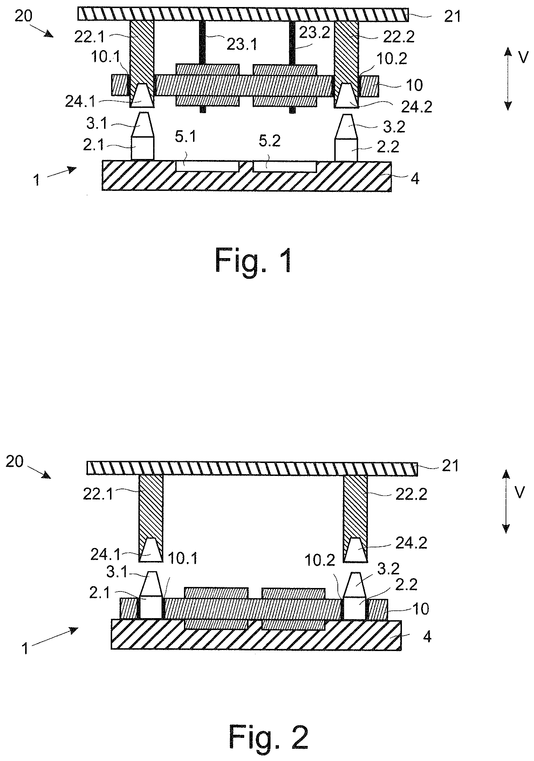

Elemente mit gleicher Funktion und Wirkungsweise sind in den Figuren 1 bis 5b jeweils mit denselben Bezugszeichen versehen.

In Fig. 1 ist in einer Seitenansicht eine Schnittdarstellung eines an einer Transportvorrichtung 20 angeordneten Faserhalbzeuges 10 gezeigt. Die Transportvorrichtung 20 bzw. Transportanlage 20 weist ein Tragelement 21 auf, von welchem sich Aufnahmemittel 22.1 und 22.2 im Wesentlichen in vertikaler Richtung V weg erstrecken. Die Aufnahmemittel 22.1 und 22.2 sind vorteilhaft in Form von Aufnahmepins bzw. Aufnahmestiften ausgestaltet, welche jeweils Aussparungen 24.1 und 24.2 aufweisen, die zur Aufnahme von entsprechenden Eingriffsbereichen 3.1, 3.2 der Positioniermittel 2.1, 2.2 einer Bearbeitungsanlage 1 dienen. Des Weiteren ist es denkbar, dass die Transportanlage 20 Arretierungsmittel 23.1 und 23.2 aufweist, welche sich im Wesentlichen auch zumindest bereichsweise unterhalb entlang des Faserhalbzeuges 10 erstrecken, um dieses zu halten und insbesondere zu arretieren, während eines Transportes des Faserhalbzeuges 10 beispielsweise von einer ersten Bearbeitungsanlage, wie in der Fig. 1 gezeigt, zu einer weiteren Bearbeitungsanlage usw.

Die in der Fig. 1 gezeigte Bearbeitungsanlage 1, welche beispielsweise eine Konsolidierungsanlage ist, weist beispielsweise eine Auflageelement 4 zum Anordnen des Faserhalbzeuges 10 auf. Ausgehend von einer Oberfläche des Auflageelementes 4 erstrecken sind die Positioniermittel 2.1 und 2.2 im Wesentlichen in vertikaler Richtung V nach oben in Richtung der Transportanlage 20 weg, um mit den Aufnahmemitteln 22.1 und 22.2 der Transportanlage 20 und insbesondere dessen Aussparungen 24.1 und 24.2 in Eingriff zu gelangen. Um ein Anordnen des Faserhalbzeuges 10 an den Aufnahmemitteln 22.1 und 22.2 der Transportanlage 20 und/oder an den Positioniermitteln 2.1 und 2.2 der Bearbeitungsanlage 1 zu ermöglichen, weist das Faserhalbzeug 10 Bohrungen 10.1 bzw. 10.2 auf, durch welche sich hindurch während des Transportes des Faserhalbzeuges 10 mittels der Transportanlage 20 die Aufnahmemittel 22.1 und 22.2 und während der Bearbeitung des Faserhalbzeuges 10 mittels der Bearbeitungsanlage 1 die Positioniermittel 2.1 und 2.2 zumindest abschnittsweise hindurch erstrecken. Des Weiteren weist das Auflageelement 4 der Bearbeitungsanlage 1 Vertiefungen bzw. Ausnehmungen 5.1 bzw. 5.2 auf, innerhalb welcher bestimmte Bereiche des Faserhalbzeuges 10 eingebracht bzw. angeordnet werden können.

Die Anordnung bzw. Auflage des Faserhalbzeuges 10 auf dem Auflageelement 4 der Bearbeitungsanlage 1 ist insbesondere in der Fig. 2 gezeigt. Hierbei zeigt sich deutlich, wie die Positioniermittel 2.1 bzw. 2.2 der Bearbeitungsanlage 1 durch die entsprechenden Bohrungen 10.1 bzw. 10.2 des Faserhalbzeuges 10 hindurchgreifen bzw. sich durch diese hindurch erstrecken, wenn die Transportanlage 20 das Faserhalbzeug 10 an die Bearbeitungsanlage 1 übergeben hat. Vorteilhaft weisen folglich die Transportanlage 20 sowie die Bearbeitungsanlage 1 geometrisch zueinander vergleichbar ausgestaltete Positioniermittel 2.1 bzw. 2.2 und Aufnahmemittel 22.1 bzw. 22.2 auf, um ein einfaches und prozesssicheres Übergeben des Faserhalbzeuges 10 von der Transportanlage 20 zu der Bearbeitungsanlage 1 zu ermöglichen.

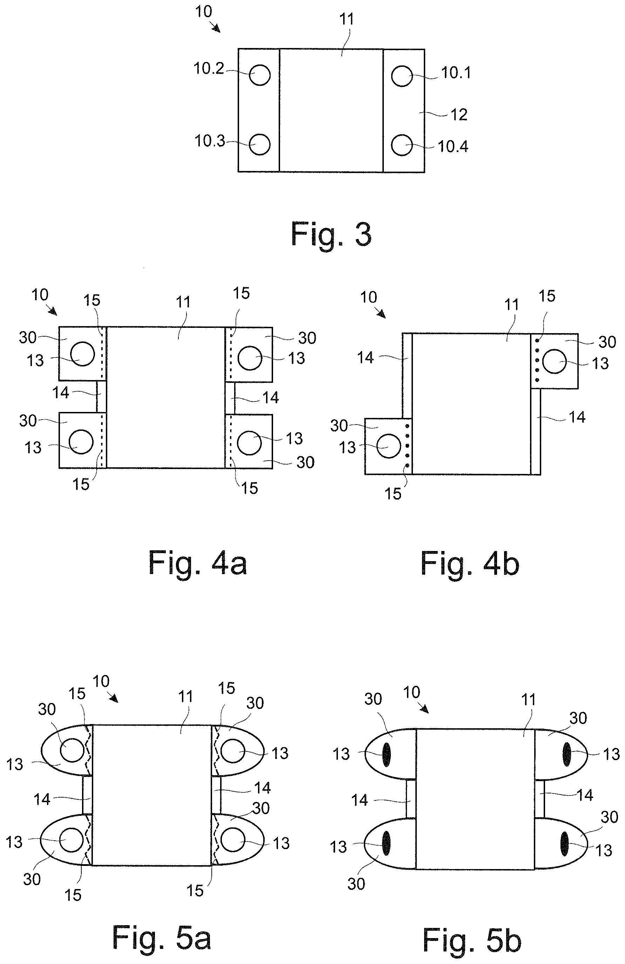

Die Ausgestaltung eines bisher bei der Anmelderin intern bekannten, entsprechende Bohrungen 10.1 und 10.2 aufweisenden Faserhalbzeuges 10 ist insbesondere in der Fig. 3 dargestellt. Das schematisch in einer Draufsicht gezeigte Faserhalbzeug 10 weist einen Bauteilbereich 11 sowie einen Beschnittbereich 12 mit entsprechenden Bohrungen 10.1, 10.2, 10.3, 10.4 auf, durch welche sich hindurch zumindest abschnittsweise die Positioniermittel 2.1, 2.2 und/oder die Aufnahmemittel 22.1 bzw. 22.2, wie in den Fig. 1 und 2 gezeigt, hindurch erstrecken. Der Beschnittbereich 12 ist insbesondere ein Bestandteil des Faserhalbzeuges 10, genau wie der Bauteilbereich 11, und weist folglich ein identisches Material zum Bauteilbereich 11 auf. Nach dem Bearbeiten des Faserhalbzeuges 10 innerhalb der Imprägnieranlage bzw. der Konsolidierungsanlage ist es erforderlich, den Beschnittbereich 12 vom Bauteilbereich 11 zu trennen, um das fertige Bauteil zu erzeugen. Nachteilig wird dadurch eine große Menge an Faserhalbzeugmaterial als Ausschuss weggeworfen, wodurch die Herstellkosten des Faserhalbzeuges 10 erhöht werden.

In den Fig. 4a bis 5b sind unterschiedliche Ausführungsformen eines erfindungsgemäßen Faserhalbzeuges 10 mit entsprechend an dem Faserhalbzeug 10 angeordneten Positionierungskörpern 30 gezeigt. Das erfindungsgemäße Faserhalbzeug 10 weist einen Bauteilbereich 11 sowie einen Überlappungsbereich 14 auf. Der Überlappungsbereich 14 ist vorteilhaft ein Bestandteil des Faserhalbzeuges 10, welcher dementsprechend ein gleiches Material zum Bauteilbereich 11 aufweist. Der Überlappungsbereich 14 erstreckt sich ausgehend vom Bauteilbereich 11 nach außen weg und weist eine derart geringe Breite auf, dass eine Anordnung des Positionierungskörpers 30 an dem Überlappungsbereich 14 vorteilhaft gerade noch möglich ist.

Die insbesondere in der Fig. 4a gezeigte Ausführungsform eines erfindungsgemäßen Faserhalbzeuges 10 weist vier Positionierungskörper 30 auf, welche beabstandet zueinander an wenigstens zwei Überlappungsbereichen 14 des Faserhalbzeuges 10 angeordnet sind. Jeder Positionierungskörper 30 weist vorteilhaft ein Anordnungselement 13 auf, welches beispielsweise, wie in der Fig. 4a gezeigt, in Form einer Bohrung und insbesondere einer Durchgangsbohrung ausgestaltet sein kann. Die Positionierungskörper 30 sind vorteilhaft in Form eines Vierecks bzw. eines Quaders gestaltet und sind mittels eines Verbindungsmittels 15 mit dem Überlappungsbereich 14 verbunden. Das Verbindungsmittel 15 kann beispielsweise ein Fadenelement, wie insbesondere ein Verbindungsfaden sein. Hierbei ist es denkbar, dass der Positionierungskörper 30 bzw. die vier Positionierungskörper 30 unter Verwendung einer Nähanlage und insbesondere einer 2D-Portalnähanlage an dem Überlappungsbereich 14 des erfindungsgemäßen Faserhalbzeuges 10 angebracht sind. Es ist jedoch auch denkbar, dass nicht vier Positionierungskörper 30, insbesondere in jedem Endbereich des Faserhalbzeuges 10, angeordnet sind, sondern lediglich nur zwei Positionierungskörper 30, wie insbesondere in der Fig. 4b gezeigt. Es ist des Weiteren denkbar, dass lediglich nur ein Positionierungskörper 30 oder auch mehr als vier Positionierungskörper 30 angeordnet und insbesondere mit dem Überlappungsbereich 14 des Faserhalbzeuges 10 verbunden werden.

Fig. 4b und die nachfolgende Beschreibung zu Fig. 4b sind nicht Teil der Erfindung. Des Weiteren ist in der Fig. 4b als Verbindungsmittel 15 schematisch eine Nietverbindung oder auch eine Schraubenverbindung aufgezeigt. Das bedeutet, es ist denkbar, dass neben einem Verbindungsfaden bzw. Fadenelement auch anderweitig ausgestaltete Verbindungsmittel Verwendung finden können. Die Anordnung des Positionierungskörpers 30 an einem Überlappungsbereich 14 des Faserhalbzeuges 10 ist insbesondere in Abhängigkeit der geometrischen Gestaltung des Faserhalbzeuges 10 sowie auch in Abhängigkeit der Anordnung der Positioniermittel 2.1 bzw. 2.2 und/oder der Aufnahmemittel 22.1 bzw. 22.2, wie insbesondere in den Fig. 1 und 2 gezeigt, abhängig. Vorteilhaft werden jedoch wenigstens zwei Positionierungskörper 30 verwendet, welche insbesondere in Umfangsrichtung des Faserhalbzeuges 10 betrachtet an einander gegenüberliegenden Seiten und vorteilhaft sich in einer Ebene im Wesentlichen parallel zueinander erstreckend angeordnet sind.

In den Fig. 5a und 5b sind weitere Ausführungsformen des erfindungsgemäßen Faserhalbzeuges mit an Überlappungsbereichen 14 angeordneten Positionierungskörpern 30 gezeigt, wobei die in den Fig. 5a und 5b gezeigten Positionierungskörper 30 keine eckige, sondern eine rund und insbesondere ovale geometrische Gestalt aufweisen. Insbesondere in der Fig. 5a sind die Positionierungskörper 30 mittels einer Zickzacknaht unter Verwendung eines Fadenelementes als Verbindungsmittel 15 mit dem Überlappungsbereich 14 des Faserhalbzeuges 10 verbunden. Dem gegenüber weisen die Positionierungskörper 30 der in der Fig. 5b gezeigten Ausführungsform des Faserhalbzeuges 10 keine in Form von Bohrungen und insbesondere Durchgangsbohrung ausgestalteten Anordnungselemente 13 auf. Vielmehr sind die Anordnungselemente 13 in Form von Vorsprüngen bzw. Erhebungen ausgestaltet, welche von entsprechenden als Greifelemente bzw. Klemmelemente ausgestalteten Positioniermitteln der Bearbeitungsanlage bzw. Aufnahmemitteln der Transportanlage gegriffen und gehalten werden können. Gemäß der in der Fig. 5b gezeigten Ausführungsform des erfindungsgemäßen Faserhalbzeuges 10 ist es auch denkbar, die Positionierungsmittel 30 beispielsweise mittels eines Klebemittels mit den Überlappungsbereichen 14 des Faserhalbzeuges zu verbinden. Folglich ist das hier nicht sichtbare Verbindungsmittel 15 ein Klebemittel. Es ist des Weiteren denkbar, dass die Positionierungsmittel 30 mit den Überlappungsbereichen 14 des Faserhalbzeuges 10 auch verschweißt werden.

### Bezugszeichenliste

- 1: Bearbeitungsanlage
- 2.1, 2.2: Positioniermittel
- 3.1, 3.2: Eingriffsbereich des Positioniermittels
- 4: Auflageelement
- 5.1, 5.2: Vertiefung des Auflageelementes
- 10: Faserhalbzeug
- 10.1, 10.2, 10.3, 10.4: Bohrung
- 11: Bauteilbereich
- 12: Beschnittbereich
- 13: Anordnungselement
- 14: Überlappungsbereich
- 15: Verbindungsmittel
- 20: Transportanlage
- 21: Tragelement
- 22.1, 22.2: Aufnahmemittel der Transportanlage
- 23.1, 23.2: Arretierungsmittel der Transportanlage
- 24.1, 24.2: Aussparung der Aufnahmemittel
- 30: Positionierungskörper
- V: vertikale Richtung

## Patentansprüche

1. System mit einem Faserhalbzeug (10) und einem Positionierungskörper (30) zum Positionieren des Faserhalbzeuges (10) zumindest an wenigstens einem Positioniermittel (2.1, 2.2) einer Bearbeitungsanlage (1) zum Bearbeiten des Faserhalbzeuges (10), wobei das Faserhalbzeug (10) zumindest einen ein Bauteil bildenden Bauteilbereich (11) und zumindest einen Überlappungsbereich (14) aufweist, wobei der Positionierungskörper (30) zumindest abschnittsweise den Überlappungsbereich (14) überlappend mittels Fadenelement an den Überlappungsbereich (14) angenäht ist, wobei der Positionierungskörper (30) wenigstens ein Anordnungselement (13) zum Kontaktieren des Positioniermittels (2.1, 2.2) aufweist, laschenförmig ausgestaltet ist und ein Material geringerer Güte als der Bauteilbereich (11) und/oder als der Überlappungsbereich (14) aufweist.

2. System mit einem Faserhalbzeug (10) gemäß Anspruch 1,
**dadurch gekennzeichnet, dass**
der Positionierungskörper (30) ein Kunststoffmaterial, ein faserverstärktes Kunststoffmaterial, ein Zellulosematerial, ein nichtmetallisches Material, ein organisches Material und/oder ein anorganisches nichtmetallisches Material aufweist.

3. System mit einem Faserhalbzeug (10) gemäß wenigstens einem der vorangegangenen Ansprüche,
**dadurch gekennzeichnet, dass**
das Anordnungselement (13) eine Bohrung (10.1, 10.2, 10.3, 10.4) und insbesondere eine Durchgangsbohrung ist.

4. Verfahren zum Herstellen eines Systems mit einem Faserhalbezug (10) gemäß einem der voranstehenden Ansprüche, wobei der laschenförmige Positionierungskörper (30) zumindest abschnittsweise den Überlappungsbereich (14) überlappend mittels einer Nähanlage unter Verwendung eines Fadenelementes an den Überlappungsbereich (14) derart angenäht wird, dass das wenigstens eine Anordnungselement (13) des Positionierungskörpers (30) in einem definierten Abstand zu dem Bauteilbereich (11) angeordnet ist.

## Claims

1. System comprising a semi-finished fibre product (10) and a positioning part (30) for positioning the semi-finished fibre product (10) on at least one positioning means (2.1, 2.2) of a processing installation (1) for processing the semi-finished fibre product (10), the semi-finished fibre product (10) having at least one component region (11), which forms a component, and at least one overlap region (14), wherein the positioning part (30) is sewn onto the overlap region (14) at least partly overlapping the overlap region (14) by means of a thread element, wherein the positioning part (30) has at least one arrangement element (13) for contacting the positioning means (2.1, 2.2), is in the form of a tab and comprises a lower-quality material than the component region (11) and/or than the overlap region (14).

2. System comprising a semi-finished fibre product (10) according to Claim 1,
**characterized in that**
the positioning part (30) comprises a plastics material, a fibre-reinforced plastics material, a cellulose material, a non-metallic material, an organic material and/or an inorganic non-metallic material.

3. System comprising a semi-finished fibre product (10) according to at least either of the preceding claims,
**characterized in that**
the arrangement element (13) is a bore (10.1, 10.2, 10.3, 10.4) and in particular a through-bore.

4. Method for producing a system comprising a semi-finished fibre product (10) according to one of the preceding claims, wherein the positioning part (30) in the form of a tab is sewn onto the overlap region (14) at least partly overlapping the overlap region (14) by means of a sewing unit and using a thread element, in such a way that the at least one arrangement element (13) of the positioning part (30) is located at a defined spacing from the component region (11).

## Revendications

1. Système comprenant un produit semi-fini fibreux (10) et un corps de positionnement (30) pour positionner le produit semi-fini fibreux (10) sur au moins un moyen de positionnement (2.1, 2.2) d'une installation de traitement (1) destinée à traiter le produit semi-fini fibreux (10), le produit semi-fini fibreux (10) comprenant au moins une zone de composant (11) formant un composant et au moins une zone de chevauchement (14), le corps de positionnement (30) étant cousu au moins partiellement à la zone de chevauchement (14) au moyen d'un élément filamentaire de manière à chevaucher la zone de chevauchement (14), le corps de positionnement (30) comprenant au moins un élément d'agencement (13) pour entrer en contact avec le moyen de positionnement (2.1, 2.2), étant réalisé sous la forme d'une languette et comprenant un matériau de qualité inférieure à celle de la zone de composant (11) et/ou de la zone de chevauchement (14).

2. Système comprenant un produit semi-fini fibreux (10) selon la revendication 1,
**caractérisé en ce que**
le corps de positionnement (30) comprend une matière plastique, une matière plastique renforcée de fibres, une matière cellulosique, une matière non métallique, une matière organique et/ou une matière non métallique inorganique.

3. Système comprenant un produit semi-fini fibreux (10) selon l'une des revendications précédentes,
**caractérisé en ce que**
l'élément d'agencement (13) est un alésage (10.1, 10.2, 10.3, 10.4) et en particulier un alésage traversant.

4. Procédé de fabrication d'un système avec un produit semi-fini fibreux (10) selon l'une des revendications précédentes, dans lequel le corps de positionnement (30) en forme de languette recouvre au moins partiellement la zone de chevauchement (14) en étant cousue à la zone de chevauchement (14) au moyen d'une installation de couture utilisant un élément filamentaire, de telle sorte que ledit au moins un élément d'agencement (13) du corps de positionnement (30) soit agencé à une distance définie de la zone de composant (11).
